# EUROPEAN PATENT APPLICATION

(11) **EP 4 324 673 A1**
(43) Date of publication of application: **21.02.2024**
(21) Application number: 22191244.7
(22) Date of filing: 19.08.2022
(51) Int. Cl.: B60K 1/00, B60K 7/00, B60K 17/02, B60K 17/04, B60K 17/16

(54) **WHEEL HUB ASSEMBLY AND AXLE ASSEMBLY FOR A VEHICLE**

(71) Applicant: Volvo Car Corporation, 405 31 Göteborg (SE)
(72) Inventor: STEN, Erik, 40531 Göteborg (SE); PETROV, Peter, 40531 Göteborg (SE)
(74) Representative: Maiwald GmbH

(57) **Abstract**

The disclosure relates to a wheel hub assembly (22) for a vehicle. The wheel hub assembly (22) comprises a mounting interface (46) for a wheel and a gear unit (26) with an input shaft (28) and an output shaft (30) being arranged coaxially with respect to each other. The output shaft (30) is coaxially coupled to the mounting interface (46). Moreover, the gear unit (26) comprises a layshaft (32) being arranged parallel to the input shaft (28) and the output shaft (30). The layshaft (32) is drivingly coupled to the input shaft (28) via a first pair (34) of gears and is drivingly coupled to the output shaft (30) via a second pair (40) of gears. Additionally, an axle assembly (10) for a vehicle is presented. It comprises a frame (12), a first electric machine (14) having a first machine output shaft (20), and a first wheel hub assembly (22, 22a) of the type mentioned before. The first electric machine (14) is supported on the frame (12) and the first machine output shaft (20) is drivingly coupled to the input shaft (28) of the first wheel hub assembly (22, 22a).

## Description

The present disclosure relates to a wheel hub assembly for a vehicle. The wheel hub assembly comprises a mounting interface for a wheel. The mounting interface is rotatable around a middle axis.

Additionally, the present disclosure is directed to an axle assembly for a vehicle.

In known vehicles, traction power has to be transmitted from a traction motor to the driven wheels. To this end, a drivetrain is used which drivingly connects the traction motor and the driven wheels. The traction motor may be an electric motor or an internal combustion engine or a combination thereof.

In vehicles having a traction motor of comparatively high performance, i.e. a traction motor being able to provide comparatively high power, the drivetrain needs to be adapted to this high performance, i.e. the drivetrain needs to be able to transmit a comparatively high torque. Thus, the drivetrain needs to be built in a comparatively stable and, consequently, comparatively heavy manner. However, the efficiency of a vehicle is strongly reduced if the weight of the vehicle is increased.

It is therefore an objective of the present disclosure to solve or at least alleviate this conflict of objectives and provide a drivetrain which is able to transmit comparatively high engine power, especially high torques, and at the same time has a comparatively low weight.

The problem is at least partially solved or alleviated by the subject matter of the independent claims of the present disclosure, wherein further examples are incorporated in the dependent claims.

According to a first aspect, there is provided a wheel hub assembly for a vehicle. The wheel hub assembly comprises a mounting interface for a wheel. The mounting interface is rotatable around a middle axis. Moreover, the wheel hub assembly comprises a gear unit with an input shaft and an output shaft being arranged coaxially with respect to each other and being rotatable around the middle axis. The output shaft is coaxially coupled to the mounting interface. Furthermore, the gear unit comprises a layshaft being arranged parallel to the input shaft and the output shaft. The layshaft is drivingly coupled to the input shaft via a first pair of gears and is drivingly coupled to the output shaft via a second pair of gears. In this context, coupling via a pair of gears means that exactly two gears are used for the coupling, one mounted on each shaft. The gear unit is configured to transform a torque. This means that the torque being fed into the gear unit at the input shaft is different from the torque being provided at the output shaft, i.e. at the mounting interface. In a case in which the torque is increased by the gear unit, a comparatively low torque is fed into the gear unit via the input shaft and a comparatively high torque is provided at the output shaft. This has the effect that the input shaft and all components of a drivetrain transmitting torque to the input shaft only need to be configured to transmit a comparatively low torque. Consequently, these components and especially the input shaft may be designed in a lightweight manner. In this context, the input shaft of the gear unit is the input shaft of the wheel hub assembly. Thus, using such a wheel hub assembly, a drivetrain may be provided which is able to transmit comparatively high torques and is lightweight at the same time.

The fact that the input shaft and the output shaft of the gear unit are arranged coaxially additionally makes the wheel hub assembly compact and easy to install.

Moreover, a layshaft gear unit is structurally simple and cost-efficient. In this context, a layshaft is an intermediate shaft within a gear unit that carries gears, but does not transfer the primary drive of the gear unit either in or out of the gear unit. In other words, the layshaft is a shaft that directly or indirectly couples an input shaft and an output shaft of a gear unit.

The mounting interface may be disk-shaped or ring-shaped and may comprise a set of holes, e.g. five or six holes, for mounting the wheel. The holes may be evenly distributed along a circle. As an alternative to such holes, a set of mounting bolts may be provided as a part of the mounting interface.

The characteristics and advantages of the wheel hub assembly according to the present disclosure are especially relevant for electric vehicles which often use drive trains that are able to provide comparatively high torques to the driven wheels and at the same time need to be lightweight in order to allow for acceptable driving ranges.

According to an example, the gear unit is a reduction gear unit. This means that the gear unit is configured to decrease a rotational speed and increase a torque of an input power. Thus, as has already been explained before, the input shaft and all components of a corresponding drive train being configured to transmit power to the input shaft may be designed as lightweight components.

In an example, the input shaft, the output shaft, and the layshaft are rotationally supported on a common housing. Consequently, the wheel hub assembly is structurally simple since is comprises comparatively few parts. This also has the effect that comparatively little assembly activities need to be performed in order to produce the wheel hub assembly.

According to a further example, the common housing forms a chassis component of a vehicle, especially a knuckle. Thus, the wheel hub assembly according to the present disclosure may be integrated into a chassis of a vehicle in a compact manner.

In an example, the input shaft and the output shaft are rotationally supported on each other. This is only possible because the input shaft and the output shaft are arranged coaxially. Supporting the input shaft and the output shaft on each other is structurally simple since no external support means are necessary. Furthermore, this configuration leads to a compact design and a comparatively low weight of the wheel hub assembly.

In an example, the first pair of gears comprises a first gear being arranged on the input shaft and a second gear being arranged on the layshaft, wherein the first gear and the second gear drivingly engage each other. Additionally or alternatively, the second pair of gears comprises a third gear being arranged on the layshaft and a fourth gear being arranged on the output shaft. The third gear and the fourth gear drivingly engage each other. The gears are rotationally fixed on the respective shafts. In this context, for each of the gears may be formed integrally with the shaft on which it is arranged. Alternatively, each of the gears may be formed as a separate part and may be mounted on the shaft. Also mixtures of these concepts are possible. For example the first gear and the third gear may be formed integrally with the respective shaft. The second gear and the fourth gear may be mounted on the respective shaft as separate parts. Altogether, this is a structurally simple solution which is very robust at the same time.

According to a second aspect, there is provided an axle assembly for a vehicle. The axle assembly comprises a frame, a first electric machine having a first machine output shaft, and a first wheel hub assembly according to the present disclosure. The first electric machine is supported on the frame and the first machine output shaft is drivingly coupled to the input shaft of the first wheel hub assembly. In such a configuration, the power being provided by the first electric machine, which may be characterized by a rotational speed and a torque, may be transformed by the wheel hub assembly in that the torque is increased and the rotational speed is decreased. This means that all components transmitting power between the first electric machine and the input shaft of the first wheel hub assembly only need to transmit a comparatively low torque. Consequently, these components may be designed in a lightweight manner. Such components are also very compact.

The axle assembly according to the present disclosure is especially suitable for being used in an electric vehicle.

In an example, the axle assembly further comprises a second wheel hub assembly according to the present disclosure. The first wheel hub assembly and the second wheel hub assembly are arranged on opposite sides of the first electric machine and the first machine output shaft is drivingly coupled to the input shaft of the second wheel hub assembly. Thus, the axle assembly may be used for driving two driven wheels of the same axle of a vehicle. In this context, the first wheel hub assembly and the second wheel hub assembly may be structurally identical. Thus, the axle assembly may be produced in a cost-efficient manner.

In an example, the input shaft of the first wheel hub assembly and the input shaft of the second wheel hub assembly are drivingly coupled to the first machine output shaft via a differential gear unit. The differential gear unit transmits power being provided by the first electric machine to both the input shaft of the first wheel hub assembly and the input shaft of the second wheel hub assembly. The torque being provided to the input shaft of the first wheel hub assembly and the input shaft of the second wheel hub assembly is substantially equal. At the same time, the differential gear unit is configured to compensate different rotational speeds of the input shaft of the first wheel hub assembly and the input shaft of the second wheel hub assembly. This is especially relevant if the vehicle using the axle assembly is driving along a curved trajectory. Thus, using the differential gear unit, power may be transmitted to the first wheel hub assembly and the second wheel hub assembly in a reliable manner.

In an example, the first machine output shaft is hollow and the differential gear unit is positioned inside the first machine output shaft. Consequently, the portion of the axle assembly comprising the first electric machine and the differential gear unit is very compact. It is noted that the differential gear unit may only be sufficiently compact due to the fact that the differential gear unit only needs to be able to transmit a comparatively low torque.

In an example, the input shaft of the first wheel hub assembly is coupled to the first machine output shaft via a first clutch unit. The input shaft of the second wheel hub assembly is coupled to the first machine output shaft via a second clutch unit. Using the first clutch unit and the second clutch unit, a torque that is transmitted from the first electric machine to the respective first wheel hub assembly or the second wheel hub assembly may be controlled by controlling the opening state of the respective first clutch unit or second clutch unit. Moreover, differences in rotational speed of the input shafts of the first wheel hub assembly and the second wheel hub assembly may be compensated by selectively opening the first clutch unit and/or the second clutch unit. In short, the first clutch unit and the second clutch unit may replace the differential gear unit. An advantage of the first clutch unit and the second clutch unit over the differential gear unit is that the first wheel hub assembly and the second wheel hub assembly may be disconnected from the first electric machine. Moreover, the first wheel hub assembly and the second wheel hub assembly may be coupled in a rotationally fixed manner. This is advantageous for certain driving conditions, e.g. on loose ground. Due to the fact that the clutch unit only need to transmit a comparatively low torque, the clutch units may be compact.

In an example, the first clutch unit and/or the second clutch unit comprises a multiple disk clutch. Such clutches have the advantage that they are able to transmit comparatively high torques while being comparatively compact. Consequently, also the axle assembly is compact. Moreover, an opening state of such clutches may be controlled in a simple and precise manner. In doing so, the torque being transmitted by the respective clutch may also be controlled in a precise manner. The multiple disk clutches may be actuated hydraulically or electromagnetically. Moreover, the multiple disk clutches may operate in a dry environment or in a wet environment.

In an example, the first clutch unit is arranged on a first axial side of the first electric machine. Additionally or alternatively, the second clutch unit is arranged on a second axial side of the first electric machine. The first axial side and the second axial side are opposite to one another. Thus, the clutches are arranged outside the first electric machine. This configuration is structurally simple.

In an example, the first machine output shaft is hollow and the first clutch unit is arranged inside the first machine output shaft. Additionally or alternatively, the second clutch unit is arranged inside first machine output shaft. This leads to a very compact design of the axle assembly. It is noted that the clutch units may only be sufficiently small to be received in the interior of the first machine output shaft because they only need to be able to transmit a comparatively low torque.

In an example, the axle assembly further comprises a second wheel hub assembly according to the present disclosure and a second electric machine having a second machine output shaft. The second electric machine is supported on the frame. The input shaft of the second wheel hub assembly is drivingly coupled to the second machine output shaft. Thus, in this example, each wheel hub assembly is drivingly connected to one electric machine and each electric machine powers only one wheel hub assembly. This has the advantage that each electric machine and each wheel hub assembly being coupled thereto may be controlled independently from one another. In this configuration, neither a differential gear unit nor a clutch unit is necessary. This renders the axle assembly structurally simple.

In an example, the first wheel hub assembly is supported on the frame via a first suspension means. Additionally or alternatively, the second wheel hub assembly is supported on the frame via a second suspension means. The first suspension means and the second suspension means are independent from one another. In other words, the axle assembly offers individual suspension for each mounting interface for a wheel and the corresponding wheel, if mounted thereto. Consequently, the axle assembly can offer a comparatively high comfort of suspension.

It should be noted that the above examples may be combined with each other irrespective of the aspect involved.

These and other aspects of the present disclosure will become apparent from and elucidated with reference to the examples described hereinafter.

Examples of the disclosure will be described in the following with reference to the following drawings.
- Figure 1: shows an axle assembly according to a first example of the present disclosure comprising two wheel hub assemblies according to the present disclosure,
- Figure 2: shows an axle assembly according to a second example of the present disclosure comprising two wheel hub assemblies according to the present disclosure,
- Figure 3: shows an axle assembly according to a third example of the present disclosure comprising two wheel hub assemblies according to the present disclosure,
- Figure 4: shows an axle assembly according to a fourth example of the present disclosure comprising two wheel hub assemblies according to the present disclosure,
- Figure 5: shows a wheel hub assembly according to the present disclosure in a perspective view, and
- Figure 6: shows the wheel hub assembly of Figure 5 in a section al view along plane VI.

The figures are merely schematic representations and serve only to illustrate examples of the disclosure. Identical or equivalent elements are in principle provided with the same reference signs.

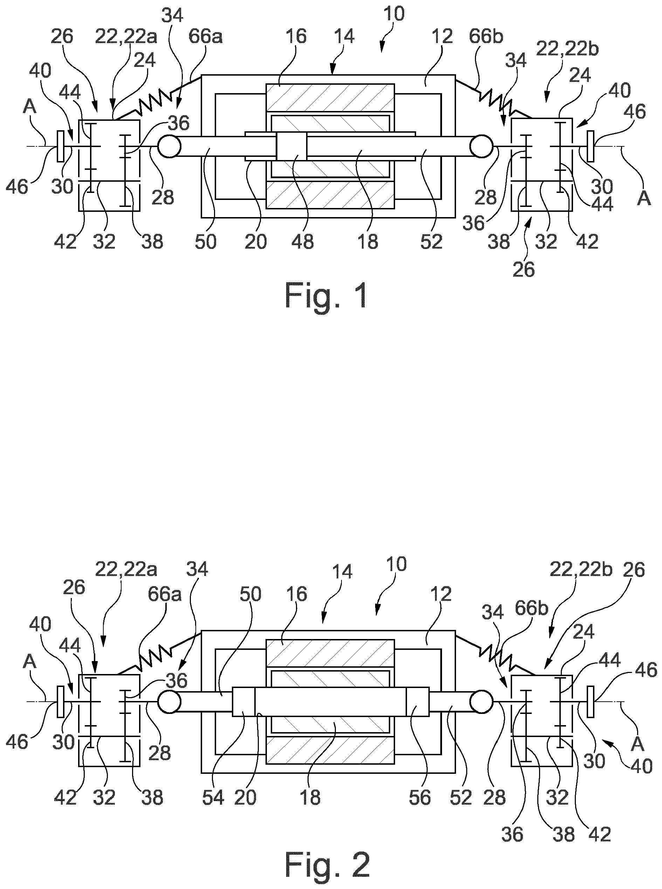

Figure 1 shows an axle assembly 10 according to a first example.

The axle assembly 10 may be used in a vehicle, more specifically in an electric vehicle.

The axle assembly 10 comprises a frame 12 and a first electric machine 14 being mounted on the frame 12.

The first electric machine 14 comprises a stator 16, a rotor 18 and a first machine output shaft 20.

In the present example, the first machine output shaft 20 is a hollow shaft.

Moreover, the axle assembly 10 comprises a first wheel hub assembly 22a and a second wheel hub assembly 22b. The first wheel hub assembly 22a and the second wheel hub assembly 22b are arranged on opposite sides of the first electric machine 14.

Since the first wheel hub assembly 22a and the second wheel hub assembly 22b are structurally similar, they will be explained together in the following. Moreover, each of the first wheel hub assembly 22a and the second wheel hub assembly 22b will simply be designated as wheel hub assembly 22.

The wheel hub assembly 22 comprises a housing 24 and a gear unit 26 being arranged inside the housing 24.

The gear unit 26 is a reduction gear unit.

The gear unit 26 comprises an input shaft 28 and an output shaft 30.

The input shaft 28 and the output shaft 30 are arranged coaxially with respect to each other and are rotatable around the middle axis A.

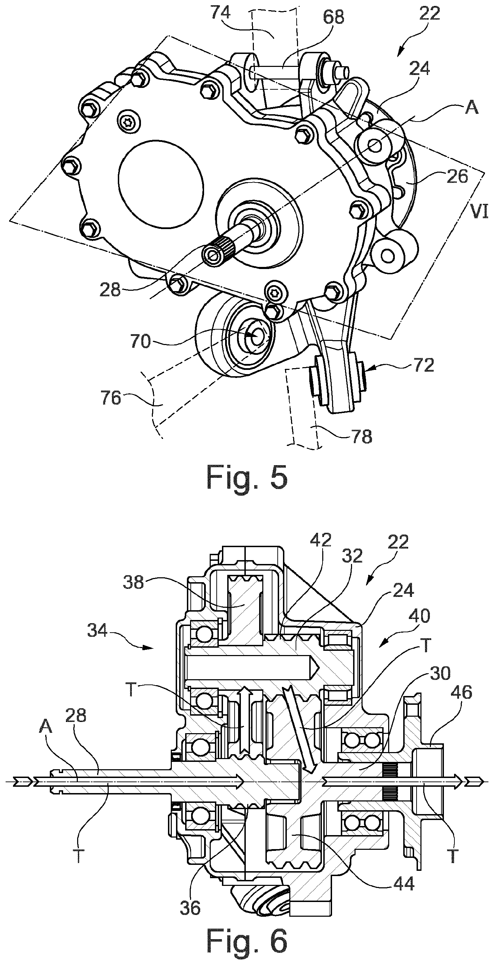

The ends of the input shaft 28 and the output shaft 30 which are facing each other are rotationally supported on each other (see also Figure 6). The respectively opposite ends, i.e. the end of the input shaft 28 which is oriented away from the output shaft 30 and the end of the output shaft 30 which is oriented away from the input shaft 28 are rotationally supported on the housing 24.

The gear unit 26 also comprises a layshaft 32.

The layshaft 32 is arranged parallel to the input shaft 28 and the output shaft 30.

Both ends of the layshaft 32 are rotationally supported on the housing 24.

Moreover, the layshaft 32 is drivingly coupled to the input shaft 28 via a first pair 34 of gears.

The first pair 34 of gears comprises a first gear 36 being arranged on the input shaft 28 and being rotationally and translatorily fixed on the input shaft 28.

Additionally, the first pair 34 of gears comprises a second gear 38 which is arranged on the layshaft 32. In more detail, the second gear 38 is rotatorily and translatorily fixed on the layshaft 32.

The first gear 36 and the second gear 38 drivingly engage each other, i.e. the first gear 36 and the second gear 38 are meshing.

Moreover, the layshaft 32 is drivingly coupled to the output shaft 30 via a second pair 40 of gears.

The second pair 40 of gears comprises a third gear 42 being arranged on the layshaft 32 and being rotationally and translatorily fixed on the layshaft 32.

Additionally, the second pair 40 of gears comprises a fourth gear 44 which is arranged on the output shaft 30. In more detail, the fourth gear 44 is rotatorily and translatorily fixed on the output shaft 30.

The third gear 42 and the fourth gear 44 drivingly engage each other, i.e. the third gear 42 and the fourth gear 44 are meshing.

Moreover, the wheel hub assembly 22 comprises a mounting interface 46 for a wheel. The mounting interface 46 is also rotatable around the middle axis A. The output shaft 30 is coaxially coupled to the mounting interface 46.

Thus, a torque may be transmitted from the input shaft 28 over the first gear and the second gear 38 to the layshaft 32. From there, the torque may be transmitted over the third gear 42 and the fourth gear 44 to the output shaft 30. The flow of torque is indicated by arrows T in Figure 6.

Additionally, the first wheel hub assembly 22a is drivingly connected to the first electric machine 14.

More precisely, the first machine output shaft 20 is hollow and in the interior of the first machine output shaft 20 a differential gear unit 48 is positioned.

The first machine output shaft 20 serves as an input for the differential gear unit 48.

At a first output side of the differential gear unit 48, a first end of a first connection shaft 50 is drivingly connected the differential gear unit 48.

A second end of the first connection shaft 50 is drivingly coupled to the to the input shaft 28 of the first wheel hub assembly 22a.

In other words, the first machine output shaft 20 is drivingly coupled to the input shaft 28 of the first wheel hub assembly 22a via the differential gear unit 48 and the first connection shaft 50.

At a second output side of the differential gear unit 48, a first end of a second connection shaft 52 is drivingly connected the differential gear unit 48.

A second end of the second connection shaft 52 is drivingly coupled to the to the input shaft 28 of the second wheel hub assembly 22b.

In other words, the first machine output shaft 20 is drivingly coupled to the input shaft 28 of the second wheel hub assembly 22b via the differential gear unit 48 and the second connection shaft 52.

Thus, power being characterized by a rotational speed of the first machine output shaft 20 and a torque being provided at the first machine output shaft 20 can be transmitted to each of the first wheel hub assembly 22a and the second wheel hub assembly 22b.

In Figure 2, an axle assembly 10 according to a second example is shown.

In the following, only the differences with respect to the first example will be explained. The same or corresponding parts will be designated with the same references signs.

In the second example, the axle assembly 10 does not comprise a differential gear unit.

Instead, a first clutch unit 54 and a second clutch unit 56 are provided.

The first clutch unit 54 and the second clutch unit 56 are arranged on opposing axial sides of the first electric machine 14. In other words, the first clutch unit 54 and the second clutch unit 56 are arranged at opposite ends of the first machine output shaft 20.

The first machine output shaft 20 also constitutes an input shaft for each of the first clutch unit 54 and the second clutch unit 56. Thus, the first machine output shaft 20 is drivingly coupled to both the first clutch unit 54 and the second clutch unit 56.

Since in the second example, the first clutch unit 54 and the second clutch unit 56 are arranged outside the first electric machine 14, the first machine output shaft 20 does not need to be hollow.

At an output side of the first clutch unit 54, the first connection shaft 50 is drivingly coupled to the first clutch unit 54.

Thus, the input shaft 28 of the first wheel hub assembly 22a is coupled to the first machine output shaft 20 via the first clutch unit 54 and the first connection shaft 50.

At an output side of the second clutch unit 56, the second connection shaft 52 is drivingly coupled to the second clutch unit 56.

Thus, the input shaft 28 of the second wheel hub assembly 22b is coupled to the first machine output shaft 20 via the second clutch unit 56 and the second connection shaft 52.

The first clutch unit 54 and the second clutch unit 56 comprise multiple disk clutches respectively. In such clutches, a slip of the disks may be precisely controlled. Consequently, by controlling the first clutch unit 54 and the second clutch unit 56, a torque being transmitted to the first wheel hub assembly 22a and the second wheel hub assembly 22b may be precisely controlled. Moreover, due to the slip that may be allowed within the first clutch unit 54 and/or the second clutch unit 56, differences in the rotational speed of the input shaft 28 of the first wheel hub assembly 22a and the second wheel hub assembly 22b may be compensated. Thus, the first clutch unit 54 and the second clutch unit 56 together have the functionality of a differential gear unit.

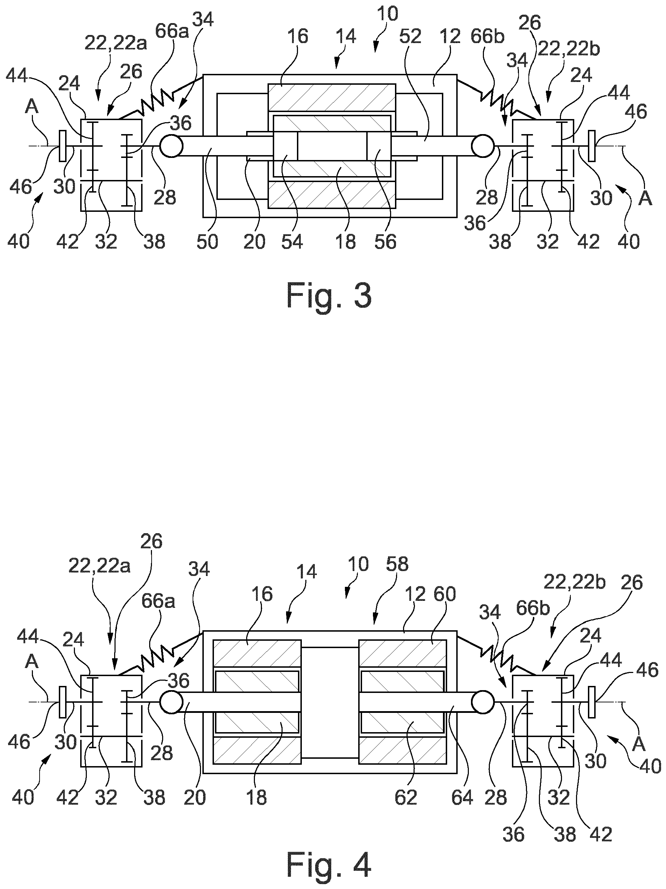

In Figure 3, an axle assembly 10 according to a third example is shown.

Again, only the differences with respect to the preceding examples will be explained. The same or corresponding parts will be designated with the same references signs.

In the third example, also a first clutch unit 54 and a second clutch unit 56 are used.

However, especially in contrast to the second example, the first machine output shaft 20 now is hollow and both the first clutch unit 54 and a second clutch unit 56 are arranged in the interior of the first machine output shaft 20.

Beyond that, reference is made to the explanations in connection with the second example.

In Figure 4, an axle assembly 10 according to a fourth example is shown.

As before, only the differences with respect to the preceding examples will be explained. The same or corresponding parts will be designated with the same references signs.

The axle assembly of Figure 4 not only comprises a first electric machine 14 but also a second electric machine 58.

The second electric machine comprises a stator 60, a rotor 62 and a second machine output shaft 64 being drivingly coupled to the rotor 62.

Both the first electric machine 14 and the second electric machine 58 are supported on the frame 12. Moreover, the first machine output shaft 20 and the second machine output shaft 64 are coaxial.

In this context, the first machine output shaft 20 is drivingly coupled to the input shaft 28 of the first wheel hub assembly 22a and the second machine output shaft 64 is drivingly coupled to the input shaft 28 of the second wheel hub assembly 22b.

It is noted that this coupling may, of course, use connection shafts. However, for the ease of representation, such connection shafts are not shown in Figure 4.

Due to the fact that the first electric machine 14 and the second electric machine 58 may be controlled independently from one another, the axle assembly 10 of Figure 4 does neither use a differential gear unit nor clutch units.

In all of the above examples, the first wheel hub assembly 22a and the second wheel hub assembly 22b are supported on the frame 12 via a first suspension means 66a and a second suspension means 66b respectively.

The first suspension means 66a and the second suspension means 66b are independent from one another.

The first suspension means 66a and the second suspension means 66b are represented schematically in Figures 1 to 4. However, in Figure 5 three suspension interfaces 68, 70, 72 or connection features for suspension components are visible. The suspension interfaces 68, 70, 72 form part of the housing 24 which is a knuckle housing in the example of Figure 5.

A hydraulic shock absorber 74 may be connected to suspension interface 68.

Moreover, a first suspension rod 76 may be connected to suspension interface 70 and a second suspension rod 78 may be connected to suspension interface 72.

Thus, each of the first wheel hub assembly 22a and the second wheel hub assembly 22b may be individually suspended. The same applies to the wheels that may be mounted on each of the first wheel hub assembly 22a and the second wheel hub assembly 22b.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 10: axle assembly
- 12: frame
- 14: first electric machine
- 16: stator
- 18: rotor
- 20: first machine output shaft
- 22, 22a: first wheel hub assembly
- 22, 22b: second wheel hub assembly
- 24: housing
- 26: gear unit
- 28: input shaft
- 30: output shaft
- 32: lay shaft
- 34: first pair of gears
- 36: first gear
- 38: second gear
- 40: second pair of gears
- 42: third gear
- 44: fourth gear
- 46: mounting interface
- 48: differential gear unit
- 50: first connection shaft
- 52: second connection shaft
- 54: first clutch unit
- 56: second clutch unit
- 58: second electric machine
- 60: stator of the second electric machine
- 62: rotor of the second electric machine
- 64: second machine output shaft
- 66a: first suspension means
- 66b: second suspension means
- 68: suspension interface
- 70: suspension interface
- 72: suspension interface
- 74: shock absorber
- 76: first suspension rod
- 78: second suspension rod

- A: middle axis
- T: torque flow

## Claims

1. A wheel hub assembly (22) for a vehicle, comprising
a mounting interface (46) for a wheel, the mounting interface (46) being rotatable around a middle axis (A), and
a gear unit (26) with an input shaft (28) and an output shaft (30) being arranged coaxially with respect to each other and being rotatable around the middle axis (A), wherein the output shaft (30) is coaxially coupled to the mounting interface (46), and wherein the gear unit (26) comprises a layshaft (32) being arranged parallel to the input shaft (28) and the output shaft (30), the layshaft (32) being drivingly coupled to the input shaft (28) via a first pair (34) of gears and being drivingly coupled to the output shaft (30) via a second pair (40) of gears.

2. The wheel hub assembly (22) according to claim 1, wherein the gear unit (26) is a reduction gear unit.

3. The wheel hub assembly (22) according to claim 1 or 2, wherein the input shaft (28), the output shaft (30), and the layshaft (32) are rotationally supported on a common housing (24).

4. The wheel hub assembly (22) according to any one of the preceding claims, wherein the input shaft (28) and the output shaft (30) are rotationally supported on each other.

5. The wheel hub assembly (22) according to any one of the preceding claims,
wherein the first pair (34) of gears comprises a first gear (36) being arranged on the input shaft (28) and a second gear (38) being arranged on the layshaft (38), wherein the first gear (36) and the second gear (38) drivingly engage each other, and/or
wherein the second pair (40) of gears comprises a third gear (42) being arranged on the layshaft (32) and a fourth gear (44) being arranged on the output shaft (30), wherein the third gear (42) and the fourth gear (44) drivingly engage each other.

6. An axle assembly (10) for a vehicle, comprising a frame (12), a first electric machine (14) having a first machine output shaft (20), and a first wheel hub assembly (22, 22a) according to any one of the preceding claims, wherein the first electric machine (14) is supported on the frame (12) and the first machine output shaft (20) is drivingly coupled to the input shaft (28) of the first wheel hub assembly (22, 22a).

7. The axle assembly (10) according to claim 6, further comprising a second wheel hub assembly (22, 22b) according to any one of claims 1 to 5, wherein the first wheel hub assembly (22, 22a) and the second wheel hub assembly (22, 22b) are arranged on opposite sides of the first electric machine (14) and the first machine output shaft (20) is drivingly coupled to the input shaft (28) of the second wheel hub assembly (22, 22b).

8. The axle assembly (10) according to claim 7, wherein the input shaft (28) of the first wheel hub assembly (22, 22a) and the input shaft (28) of the second wheel hub assembly (22, 22b) are drivingly coupled to the first machine output shaft (20) via a differential gear unit (48).

9. The axle assembly (10) according to claim 8, wherein the first machine output shaft (20) is hollow and the differential gear unit (48) is positioned inside the first machine output shaft (20).

10. The axle assembly (10) according to claim 7, wherein the input shaft (28) of the first wheel hub assembly (22, 22a) is coupled to the first machine output shaft (20) via a first clutch unit (54) and wherein the input shaft (28) of the second wheel hub assembly (22, 22b) is coupled to the first machine output shaft (20) via a second clutch unit (56).

11. The axle assembly (10) according to claim 10, wherein the first clutch unit (54) and/or the second clutch unit (56) comprises a multiple disk clutch.

12. The axle assembly (10) according to claim 10 or 11, wherein the first clutch unit (54) is arranged on a first axial side of the first electric machine (14) and/or the second clutch unit (56) is arranged on a second axial side of the first electric machine (14), the first axial side and the second axial side being opposite to one another.

13. The axle assembly (10) according to claim 10 or 11, wherein the first machine output shaft (20) is hollow and
wherein the first clutch unit (54) is arranged inside the first machine output shaft (20) and/or wherein the second clutch unit (56) is arranged inside first machine output shaft (20).

14. The axle assembly (10) according to claim 6, further comprising a second wheel hub assembly (22, 22b) according to any one of claims 1 to 5 and a second electric machine (58) having a second machine output shaft (64) being supported on the frame (12), wherein the input shaft (28) of the second wheel hub assembly (22, 22b) is drivingly coupled to the second machine output shaft (64).

15. The axle assembly (10) according to any one of claims 6 to 14, wherein the first wheel hub assembly (22, 22a) is supported on the frame (12) via a first suspension means (66a) and/or the second wheel hub assembly (22, 22b) is supported on the frame (12) via a second suspension means (66b), the first suspension means (66a) and the second suspension means (66b) being independent from one another.

## Amended claims

### Amended claims in accordance with Rule 137(2) EPC.

1. A wheel hub assembly (22) for a vehicle, comprising
a mounting interface (46) for a wheel, the mounting interface (46) being rotatable around a middle axis (A), and
a gear unit (26) with an input shaft (28) and an output shaft (30) being arranged coaxially with respect to each other and being rotatable around the middle axis (A), wherein the output shaft (30) is coaxially coupled to the mounting interface (46), wherein the input shaft (28) is the input shaft of the wheel hub assembly (22), and wherein the gear unit (26) comprises a layshaft (32) being arranged parallel to the input shaft (28) and the output shaft (30), the layshaft (32) being drivingly coupled to the input shaft (28) via a first pair (34) of gears and being drivingly coupled to the output shaft (30) via a second pair (40) of gears.

2. The wheel hub assembly (22) according to claim 1, wherein the gear unit (26) is a reduction gear unit.

3. The wheel hub assembly (22) according to claim 1 or 2, wherein the input shaft (28), the output shaft (30), and the layshaft (32) are rotationally supported on a common housing (24).

4. The wheel hub assembly (22) according to any one of the preceding claims, wherein the input shaft (28) and the output shaft (30) are rotationally supported on each other.

5. The wheel hub assembly (22) according to any one of the preceding claims,
wherein the first pair (34) of gears comprises a first gear (36) being arranged on the input shaft (28) and a second gear (38) being arranged on the layshaft (38), wherein the first gear (36) and the second gear (38) drivingly engage each other, and/or
wherein the second pair (40) of gears comprises a third gear (42) being arranged on the layshaft (32) and a fourth gear (44) being arranged on the output shaft (30), wherein the third gear (42) and the fourth gear (44) drivingly engage each other.

6. An axle assembly (10) for a vehicle, comprising a frame (12), a first electric machine (14) having a first machine output shaft (20), and a first wheel hub assembly (22, 22a) according to any one of the preceding claims, wherein the first electric machine (14) is supported on the frame (12) and the first machine output shaft (20) is drivingly coupled to the input shaft (28) of the first wheel hub assembly (22, 22a).

7. The axle assembly (10) according to claim 6, further comprising a second wheel hub assembly (22, 22b) according to any one of claims 1 to 5, wherein the first wheel hub assembly (22, 22a) and the second wheel hub assembly (22, 22b) are arranged on opposite sides of the first electric machine (14) and the first machine output shaft (20) is drivingly coupled to the input shaft (28) of the second wheel hub assembly (22, 22b).

8. The axle assembly (10) according to claim 7, wherein the input shaft (28) of the first wheel hub assembly (22, 22a) and the input shaft (28) of the second wheel hub assembly (22, 22b) are drivingly coupled to the first machine output shaft (20) via a differential gear unit (48).

9. The axle assembly (10) according to claim 8, wherein the first machine output shaft (20) is hollow and the differential gear unit (48) is positioned inside the first machine output shaft (20).

10. The axle assembly (10) according to claim 7, wherein the input shaft (28) of the first wheel hub assembly (22, 22a) is coupled to the first machine output shaft (20) via a first clutch unit (54) and wherein the input shaft (28) of the second wheel hub assembly (22, 22b) is coupled to the first machine output shaft (20) via a second clutch unit (56).

11. The axle assembly (10) according to claim 10, wherein the first clutch unit (54) and/or the second clutch unit (56) comprises a multiple disk clutch.

12. The axle assembly (10) according to claim 10 or 11, wherein the first clutch unit (54) is arranged on a first axial side of the first electric machine (14) and/or the second clutch unit (56) is arranged on a second axial side of the first electric machine (14), the first axial side and the second axial side being opposite to one another.

13. The axle assembly (10) according to claim 10 or 11, wherein the first machine output shaft (20) is hollow and
wherein the first clutch unit (54) is arranged inside the first machine output shaft (20) and/or wherein the second clutch unit (56) is arranged inside first machine output shaft (20).

14. The axle assembly (10) according to claim 6, further comprising a second wheel hub assembly (22, 22b) according to any one of claims 1 to 5 and a second electric machine (58) having a second machine output shaft (64) being supported on the frame (12), wherein the input shaft (28) of the second wheel hub assembly (22, 22b) is drivingly coupled to the second machine output shaft (64).

15. The axle assembly (10) according to any one of claims 6 to 14, wherein the first wheel hub assembly (22, 22a) is supported on the frame (12) via a first suspension means (66a) and/or the second wheel hub assembly (22, 22b) is supported on the frame (12) via a second suspension means (66b), the first suspension means (66a) and the second suspension means (66b) being independent from one another.
